# EUROPÄISCHE PATENTSCHRIFT

(11) **EP 3 111 104 B1**
(45) Veröffentlichungstag und Bekanntmachung des Hinweises auf die Patenterteilung: **29.07.2020**
(21) Anmeldenummer: 15705996.5
(22) Anmeldetag: 19.02.2015
(51) Int. Cl.: F16F 1/366, F16F 3/02, F16F 1/368, B60G 11/02

(54) **TRAGFEDEREINHEIT FÜR EIN FAHRZEUGFAHRWERK**
SUSPENSION SPRING UNIT FOR A VEHICLE CHASSIS
UNITÉ RESSORT DE SUSPENSION POUR UN TRAIN DE ROULEMENT DE VÉHICULE

(30) Priorität: 24.02.2014 DE 102014102330
(43) Veröffentlichungstag der Anmeldung: 04.01.2017
(73) Patentinhaber: ThyssenKrupp Federn und Stabilisatoren GmbH, 58119 Hagen (DE)
(72) Erfinder: GROSS, Marcel, 44359 Dortmund (DE); LECHNER, Dieter, 40470 Düsseldorf (DE); SCHARR, Gerhard, 18107 Elmenhorst (DE)
(74) Vertreter: thyssenkrupp Intellectual Property GmbH
(86) Internationale Anmeldenummer: PCT/EP2015/053536
(87) Internationale Veröffentlichungsnummer: WO 2015/124693

(56) Entgegenhaltungen:
- EP-A1- 0 459 220
- EP-A2- 0 042 068
- EP-A2- 0 351 738
- DE-A1- 10 146 348
- JP-U- S5 721 847

## Beschreibung

Die vorliegende Erfindung betrifft eine Tragfedereinheit für ein Kraftfahrzeug, die zwischen einem Fahrzeugaufbau und einem Radträger anordbar ist und einen Bestandteil des Fahrzeugfahrwerkes bildet, ausgebildet mit Federkörper aus einem Faserverbundwerkstoff.

### STAND DER TECHNIK

Aus der DE 101 41 432 A1 ist eine Verbundfaserfeder bekannt, die aus zwei Blattfedern aus Faserverbundwerkstoff aufgebaut ist, und die Blattfedern sind an ihren Enden über Verbindungselemente miteinander verbunden. Die Blattfedern sind rechteckförmig ausgebildet und weisen eine Krümmung auf, und die Blattfedern sind über Endkanten mit den Verbindungselementen verbunden. Dabei weisen die konkaven Flächen der Blattfeder aufeinander zu, sodass die beiden Blattfedern gemeinsam mit den Verbindungselementen eine Form ähnlich eines geschlossenen Ovals bilden. Um eine Kraft in die Blattfedern einzuleiten, sind etwa mittig zwischen den Endkanten der Blattfedern Krafteinleitungselemente auf den Blattfedern aufgebracht.

Die DE 10 2008 006 411 A1 zeigt eine weitere Tragfedereinheit für ein Fahrzeugfahrwerk in Form einer Bandfeder aus Faserverbundmaterial mit einem wellenförmigen Verlauf, wobei die Bandfeder als einzelner Wellenzug aus Umkehrbereichen und Zwischenabschnitten gebildet ist, sodass die Bandfeder mäanderförmig verläuft. Durch die einteilige Herstellung der Tragfedereinheit aus einer einzigen Bandfeder ist der Aufbau der Tragfedereinheit jedoch nicht modifizierbar und aufwendig in der Herstellung. Beispielsweise können durch die einstückige Ausbildung der Bandfeder Anpassungen der Federrate nur durch einen Austausch der gesamten Bandfeder vorgenommen werden. Zudem ist die Herstellung der Bandfeder als großes, einteiliges Bauteil erschwert, da die Ablage der Fasern des Faserverbundwerkstoffes in einer Form erfolgen muss.

Aus der JP S57 21847 U ist eine weitere erfindungsgemäße Feder bekannt.

### OFFENBARUNG DER ERFINDUNG

Aufgabe der Erfindung ist die Weiterbildung einer Tragfedereinheit für ein Fahrzeugfahrwerk, die mit Federkörpern aus einem Faserverbundwerkstoff ausgeführt sein soll, wobei die Tragfedereinheit einfach in der Herstellung und flexibel im Aufbau sein soll, insbesondere sollen die Federeigenschaften der Tragfedereinheit durch einfache Mittel entsprechenden Anforderungen angepasst werden können.

Diese Aufgabe wird ausgehend von einer Tragfedereinheit für ein Fahrzeugfahrwerk mit Federkörpern aus einem Faserverbundwerkstoff gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass wenigstens zwei in Reihe angeordnete Ringfedern aus einem Faserverbundwerkstoff mit einer jeweils geschlossenen Kontur vorgesehen sind, die über wenigstens ein Verbindungselement miteinander verbunden sind.

Erfindungsgemäß werden zur Bildung der Tragfedereinheit die Federkörper aus einem Faserverbundwerkstoff durch Ringkörper gebildet, die eine geschlossene Kontur aufweisen. Die Ringkörper sind dabei über Verbindungselemente insbesondere über ihre Ringaußenseiten miteinander verbunden, und es können wenigstens zwei und insbesondere mehrere Ringkörper in Reihe miteinander verbunden sein, um die Tragfedereinheit für ein Fahrzeugfahrwerk zu bilden. Die Ringkörper sind dabei mittig über die Verbindungselemente miteinander gekoppelt, und die Verbindungselemente dienen zur Kraftübertragung, sodass die Ringkörper und die Verbindungselemente durch die Reihenschaltung jeweils die gleiche Kraft übertragen, beispielsweise zwischen dem Radträger und dem Fahrzeugaufbau. Mit Vorteil können wenigstens zwei Verbindungselemente an den Ringkörpern diametral gegenüberliegend angeordnet sein, sodass eine durch die Verbindungselemente verlaufende Federrichtung definiert ist. Dabei können die Ringkörper oval ausgebildet sein und/oder es kann vorgesehen sein, dass die Ringkörper in einer quer zur Federrichtung verlaufenden Querrichtung längs ausgebildet sind. Dadurch ergeben sich einzelne Ringkörper, die die Form eines zweiseitig abgeflachten Ringes oder eines Ovals aufweisen. Die einzelnen Ringkörper können dabei alle die gleichen oder unterschiedliche Federcharakteristiken aufweisen. Bei Beanspruchung der Tragfedereinheit werden die einzelnen Ringkörper zusammengedrückt und der Gesamtfederweg der Tragfedereinheit setzt sich zusammen aus den jeweiligen Federwegen der einzelnen Ringkörper. Die einzelnen übereinanderliegenden und durch die Verbindungselemente verbundenen Ringkörper können hinsichtlich ihrer Erstreckung in Querrichtung alle parallel, jedoch auch in verschiedenen Winkeln um die gemeinsame Federrichtung verdreht zueinander angeordnet sein.

Die einzelnen Ringkörper lassen sich preisgünstig in einfachen Wickelverfahren herstellen, und es ist von besonderem Vorteil, wenn der Faserverbundwerkstoff Faserlagen umfasst, die wenigstens überwiegend und vorzugsweise vollständig in Umfangsrichtung der Ringkörper verlaufen. Dadurch ergibt sich eine besonders einfache Herstellung der Ringkörper durch ein Wickelverfahren. Zur Erzeugung einer Querschnittsfestigkeit in lateraler Richtung zur Umlaufrichtung kann der Ringkörper wenigstens eine Flechtlage umfassen, und die Wickelfasern und die Flechtlage können in einer Matrix, beispielsweise aus einem Epoxidharz, eingebracht sein.

Insbesondere die Ausbildung als ovale Ringkörper mit einer die längere Achse des Ovals bildenden Querrichtung, die sich in der länglichen Achse der ovalen Ringkörper erstreckt und die quer zur Federrichtung verläuft, können die Ringkörper auf einfache Weise hergestellt werden. Die Ringkörper können dabei jedoch auch ringförmig, oval, das heißt, über den gesamten Umfang mit einer veränderlichen Krümmung oder als längliche Ringe ausgeführt sein, sodass die geschlossene Kontur der Ringkörper durch zwei in Querrichtung etwa parallel zueinander verlaufende und im Wesentlichen gerade Hauptabschnitte und zwei die Hauptabschnitte verbindende Radiusabschnitte gebildet ist. Durch die parallel zueinander verlaufenden Hauptabschnitte der Ringkörper ergibt sich beispielsweise eine geringere Bauhöhe der Tragfedereinheit, bestehend aus mehreren Ringkörpern. Die Verbindungselemente können die Ringkörper mit den Hauptabschnitten verbinden, sodass die Verbindungselemente beispielsweise mittig an den Hauptabschnitten an die Ringkörper angebunden sind.

Der Faserverbundwerkstoff kann beispielsweise ein Glasfasermaterial oder ein Kohlefasermaterial umfassen, und als Matrix kann beispielsweise ein Harz, insbesondere ein Epoxidharz, verwendet werden.

Das Verhältnis der Länge der Achse in Querrichtung zu einer Länge einer in Federrichtung verlaufenden Achse der Ringkörper kann einen Wert von 2:1 bis 10:1 und vorzugsweise von 3:1 bis 5:1 entsprechen. Je größer das Verhältnis, desto breiter baut die Tragfedereinheit, wobei im Allgemeinen Ringkörper mit ovalem Querschnitt und einer großen Hauptachse im Vergleich zu einer eher kurzen Höhe im Allgemeinen eine geringere Federrate bewirken, da die Nachgiebigkeit der einzelnen Ringkörper in Höhenrichtung größer ist.

Gemäß einer weiteren vorteilhaften Ausführungsform der erfindungsgemäßen Tragfedereinheit kann wenigstens ein Führungselement vorgesehen sein, das die Ringkörper führt und ein Ausknicken der Ringkörper aus der Federrichtung verhindert. Die einzelnen Ringkörper können dabei bei einer Einfederung im Führungselement abgleiten, um die Beweglichkeit der Ringkörper gegenüber dem beispielsweise starr angeordneten Führungselement zu gewährleisten. Beispielsweise können auch zwei Führungselemente gegenüberliegend die Ringkörper einfassen, und beispielsweise können die Ringkörper über ihre Radiusabschnitte in wenigstens einem Führungselement geführt sein. Auch ist es denkbar, dass das oder die Führungselemente ein Gehäuse bilden, das die Ringkörper vor Feuchtigkeit und Verunreinigungen schützt.

Die Ringkörper weisen einen flach ausgebildeten Umlaufquerschnitt nach Art eines Flachbandes auf. Dabei ist das wenigstens eine Verbindungselement so mit dem Umlaufquerschnitt verbunden, dass das Flachband mit einem unveränderten Querschnittsverlauf die Verbindungsstelle mit dem Verbindungselement durchläuft. Dadurch entsteht eine vorteilhafte Belastung der Ringkörper. Mit besonderem Vorteil kann der Umlaufquerschnitt über dem gesamten Umfang der Ringkörper unverändert, das heißt, gleichbleibend ausgebildet sein.

Die erfindungsgemäße Tragfedereinheit kann durch die Ausbildung von Federkörpern aus einem Faserverbundwerkstoff in Gestalt von Ringkörpern mit einer geschlossenen Kontur besonders leicht ausgebildet sein, wobei die Tragfedereinheit gleiche oder ähnliche Federeigenschaften aufweisen kann, wie eine Stahlfeder, die als Tragfeder im Fahrwerk eines Fahrzeugs Anwendung findet. Dabei weist die Tragfedereinheit ein äußerst geringes Gewicht auf, und in Abhängigkeit der Dimensionierung der Ringkörper kann die Leistungsfähigkeit der Tragfedereinheit mit den Merkmalen der vorliegenden Erfindung hinreichend sein, um als Fahrwerksfeder eines Fahrzeugs Anwendung zu finden. Beispielsweise können auch mehrere Verbindungselemente zwischen zwei Ringkörpern vorgesehen sein, die beabstandet zueinander mit dem Flachband des Ringkörpers verbunden sind, beispielsweise um eine Lasteinleitung in den Ringkörper besser zu verteilen.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematisierte Ansicht einer Tragfedereinheit mit Federkörpern aus einem Faserverbundwerkstoff und
- Figur 2: die Tragfedereinheit in einem belasteten Zustand, sodass die Ringkörper eine elastische Verformung aufweisen.

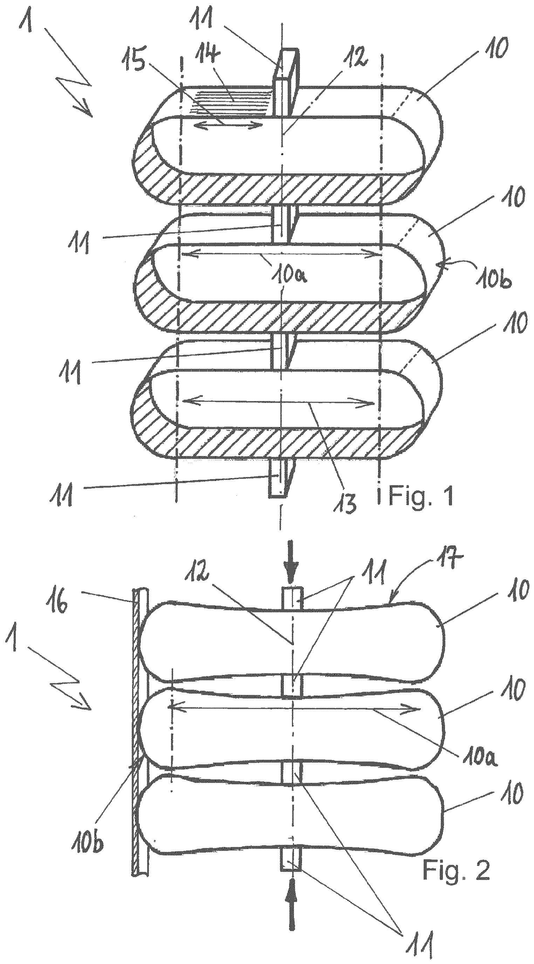

Figur 1 zeigt eine Tragfedereinheit 1 in einer schematisierten Ansicht mit perspektivisch dargestellten Ringkörpern 10, die aus einem Faserverbundwerkstoff hergestellt sind und Federkörper der Tragfedereinheit 1 bilden. Die Tragfedereinheit 1 kann in nicht näher gezeigter Weise für ein Fahrzeugfahrwerk eines Fahrzeugs dienen, und die Tragfedereinheit 1 kann beispielsweise zwischen einem Fahrzeugaufbau und einem Radträger angeordnet sein, und so ein Bestandteil eines Fahrzeugfahrwerkes bilden.

Beispielhaft weist die Tragfedereinheit 1 drei Ringkörper 10 auf, die durch Verbindungselemente 11 miteinander verbunden sind. Um die Tragfedereinheit 1 auch mit dem Fahrzeugaufbau und dem Radträger zu verbinden, weist der obere Ringkörper 10 und der untere Ringkörper 10 jeweils außenseitig weitere Verbindungselemente 11 auf.

Die Verbindungselemente 11 sind an den Ringkörpern 10 diametral gegenüberliegend angeordnet, sodass eine durch die Verbindungselemente 11 verlaufende Federrichtung 12 definiert ist. Wird die Tragfedereinheit 1 über die äußeren Verbindungselemente 11 druckbelastet, so federn die Ringkörper 10 in Federrichtung 12 ein, sodass sich die Länge der Tragfedereinheit 1 entsprechend verkürzt.

Die Ringkörper 10 sind mit einer geschlossenen, gleichbleibenden Kontur ausgeführt, und die Ringkörper 10 weisen ein Flachband mit einem gleichbleibenden Umlaufquerschnitt auf. Die Ringkörper 10 sind aus einem Faserverbundwerkstoff hergestellt und weisen Faserlagen 14 auf, wie beispielhaft am oberen Ringkörper 10 dargestellt. Die Faserlagen 14 verlaufen in Umfangsrichtung 15, und die Umfangsrichtung 15 definiert die Umlaufrichtung der Ringkörper 10. Durch den Verlauf wenigstens eines überwiegenden Teils der Faserlagen 14 in Umfangsrichtung 15 entsteht ein vorteilhafter Lastfall hinsichtlich der Belastung der Ringkörper 10, da die Ringkörper 10 nur quer zur Umfangsrichtung 15 belastet werden, sodass die Fasern der Faserlagen 14 die Belastung entsprechend aufnehmen können, und die Ringkörper 10 sind in Längsrichtung der Fasern der Faserlage 14 belastet.

Die beispielhaft dargestellten drei Ringkörper 10 sind geometrisch gleich ausgeführt, jedoch können die Ringkörper 10 auch unterschiedliche Ausgestaltungen aufweisen und mit den Verbindungselementen 11 miteinander verbunden werden. Federt die Tragfedereinheit 1 ein, so addieren sich die Federwege der einzelnen Ringkörper 10 zu einem Gesamtfederweg, wobei auch die Steifigkeit der einzelnen Ringkörper 10 nicht zwingend gleich sein muss, und die Ringkörper 10 können unterschiedliche Federraten aufweisen.

Das Ausführungsbeispiel zeigt eine Tragfedereinheit 1 mit oval ausgeführten Ringkörpern 10, und die Ringkörper 10 besitzen eine quer zur Federrichtung 10 verlaufende Querrichtung 13, beispielhaft am unteren Ringkörper 10 dargestellt. Die Ringkörper 10 weisen damit eine in Querrichtung verlaufende größere Erstreckung auf als die Höhe der Ringkörper 10 in Federrichtung 12.

Die beispielhaft dargestellten Ringkörper 10 sind als abgeflachte Ringe ausgebildet und die geschlossene Kontur der Ringkörper 10 ist durch zwei in Querrichtung 13 etwa parallel zueinander verlaufende und im Wesentlichen gerade Hauptabschnitte 10a und in zwei die Hauptabschnitte 10a verbindende 10b gebildet.

Figur 2 stellt die Tragfedereinheit 1 gemäß Figur 1 in einer schematisierten Seitenansicht dar, wobei die Tragfedereinheit 1, angedeutet durch Pfeile, mit einer Druckkraft über die äußeren Verbindungselemente 11 beaufschlagt ist. Die Druckkraft, die auf die Tragfedereinheit 1 aufgebracht ist, ist durch die Serienschaltung in den Ringkörpern 10 und in den Verbindungselementen 11 in jedem der Körper und Elemente gleich groß. Durch die aufgebrachte Druckbelastung sind die Ringkörper 10 mit einer Verformung dargestellt, insbesondere weisen die Hauptabschnitte 10a der Ringkörper 10 eine nach innen in die Ringkörper 10 ausgebildete Einfederung 17 auf.

Beispielhaft ist auf der linken Seite der Ringkörper 10 ein Führungselement 16 dargestellt, und das Führungselement 16 dient zur Führung der Ringkörper 10 über die Radiusabschnitte 10b, die die Hauptabschnitte 10a in Querrichtung 13 bogenförmig miteinander verbinden. Damit führt das Führungselement 16 die Ringkörper 10 über die Radiusabschnitte 10b. Das Führungselement 16 ist so ausgeführt, dass die Radiusabschnitte 10b in Federrichtung 12 im Führungselement 16 abgleiten können, sodass das Führungselement 16 nur zur Führung der Ringkörper 10 dient und keine Kräfte auf diese ausübt. Zusätzlich kann ein weiteres Führungselement 16 auf gleiche Weise auf der rechten Seite gegenüberliegend zum dargestellten Führungselement 16 vorgesehen sein. Das Führungselement 16 ist als Schiene ausgeführt und verhindert insbesondere ein seitliches Verdrehen der einzelnen Ringkörper 10.

Mit der im Ausführungsbeispiel zur vorliegenden Erfindung dargestellten Tragfedereinheit 1 wird eine Federeinheit bereitgestellt, die als Fahrzeugtragfeder dienen kann und aus einem Faserverbundwerkstoff mit sehr geringem Gewicht bereitgestellt wird. Die Tragfedereinheit 1 kann dabei gegenüber herkömmlichen Stahlfedern ein erheblich geringeres Gewicht aufweisen, jedoch kann die Tragfedereinheit 1 die gleiche Federcharakteristik und Leistungsfähigkeit wie eine entsprechende Stahlfeder besitzen.

Die Erfindung beschränkt sich in Ihrer Ausführung nicht auf das vorstehend angegebene bevorzugte Ausführungsbeispiel. Vielmehr ist eine Anzahl von Varianten denkbar, welche von der dargestellten Lösung, auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Tragfedereinheit

- 10: Ringkörper
- 10a: Hauptabschnitt
- 10b: Radiusabschnitt
- 11: Verbindungselement
- 12: Federrichtung
- 13: Querrichtung
- 14: Faserlage
- 15: Umfangsrichtung
- 16: Führungselement
- 17: Einfederung

## Patentansprüche

1. Tragfedereinheit (1) für ein Fahrzeugfahrwerk, die zwischen einem Fahrzeugaufbau und einem Radträger anordbar ist und einen Bestandteil des Fahrzeugfahrwerkes bildet, ausgebildet mit Federkörpern aus einem Faserverbundwerkstoff, wobei wenigstens zwei in Reihe angeordnete Ringkörper (10) aus einem Faserverbundwerkstoff mit einer jeweils geschlossenen Kontur vorgesehen sind, die über wenigstens ein Verbindungselement (11) miteinander verbunden sind, wobei die Ringkörper (10) einen flach ausgebildeten Umlaufquerschnitt nach Art eines Flachbandes aufweisen,
**dadurch gekennzeichnet, dass** das wenigstens eine Verbindungselement (11) so mit dem Umlaufquerschnitt verbunden ist, dass das Flachband mit einem unveränderten Querschnittsverlauf die Verbindungsstelle mit dem Verbindungselement (11) durchläuft.

2. Tragfedereinheit (1) nach Anspruch 1, **dadurch gekennzeichnet, dass** wenigstens zwei Verbindungselemente (11) an den Ringkörpern (10) diametral gegenüberliegend angeordnet sind, sodass eine durch die Verbindungselemente (11) verlaufende Federrichtung (12) definiert ist.

3. Tragfedereinheit (1) nach Anspruch 1 oder 2, **dadurch gekennzeichnet, dass** die Ringkörper (10) oval ausgebildet sind und/oder dass die Ringkörper (10) in einer quer zur Federrichtung (12) verlaufenden Querrichtung (13) länglich ausgebildet sind.

4. Tragfedereinheit (1) nach einem der Ansprüche 1 bis 3, **dadurch gekennzeichnet, dass** die geschlossene Kontur der Ringkörper (10) durch zwei in Querrichtung (13) etwa parallel zueinander verlaufende und im Wesentlichen gerade Hauptabschnitte (10a) und zwei die Hauptabschnitte (10a) verbindende Radiusabschnitte (10b) gebildet ist.

5. Tragfedereinheit (1) nach Anspruch 3, **dadurch gekennzeichnet, dass** durch die ovale Ausbildung eine Querrichtung (13) bestimmt ist, die sich in der länglichen Achse der ovalen Ringkörper (10) erstreckt und die quer zur Federrichtung (12) verläuft.

6. Tragfedereinheit (1) nach einem der vorgenannten Ansprüche, **dadurch gekennzeichnet, dass** das Verhältnis der Länge einer Achse in Querrichtung (13) zu einer Länge einer in Federrichtung (12) verlaufenden Achse der Ringkörper (10) einem Wert von 2:1 bis 10:1 und vorzugsweise von 3:1 bis 5:1 entspricht.

7. Tragfedereinheit (1) nach einem der vorgenannten Ansprüche, **dadurch gekennzeichnet, dass** der Faserverbundwerkstoff Faserlagen (14) umfasst und insbesondere aus diesen ausgebildet ist, die wenigstens überwiegend in Umfangsrichtung (15) der Ringkörper (10) verlaufen.

8. Tragfedereinheit (1) nach einem der vorgenannten Ansprüche, **dadurch gekennzeichnet, dass** wenigstens ein Führungselement (16) vorgesehen ist, das die Ringkörper (10) führt und ein Ausknicken der Ringkörper (10) aus der Federrichtung (12) verhindert.

## Claims

1. Suspension spring unit (1) for a vehicle chassis, which suspension spring unit (1) can be arranged between a vehicle body and a wheel support and forms a constituent part of the vehicle chassis, configured with spring bodies made from a fibre composite material, at least two ring bodies (10) which are arranged in series and are made from a fibre composite material with a respectively closed contour being provided which are connected to one another via at least one connecting element (11), the ring bodies (10) having a circumferential cross section of flat configuration in the manner of a flat belt, **characterized in that** the at least one connecting element (11) is connected to the circumferential cross section in such a way that the flat belt runs with an unchanged cross-sectional profile through the connecting point to the connecting element (11).

2. Suspension spring unit (1) according to Claim 1, **characterized in that** at least two connecting elements (11) are arranged on the ring bodies (10) so as to lie diametrically opposite one another, with the result that a spring direction (12) which runs through the connecting elements (11) is defined.

3. Suspension spring unit (1) according to Claim 1 or 2, **characterized in that** the ring bodies (10) are of oval configuration, and/or **in that** the ring bodies (10) are of elongate configuration in a transverse direction (13) which runs transversely with respect to the spring direction (12).

4. Suspension spring unit (1) according to one of Claims 1 to 3, **characterized in that** the closed contour of the ring bodies (10) is formed by way of two substantially straight main sections (10a) which run approximately parallel to one another in the transverse direction (13) and two radius sections (10b) which connect the main sections (10a).

5. Suspension spring unit (1) according to Claim 3, **characterized in that** a transverse direction (13) which extends in the elongate axis of the oval ring bodies (10) and which runs transversely with respect to the spring direction (12) is defined by way of the oval configuration.

6. Suspension spring unit (1) according to one of the preceding claims, **characterized in that** the ratio of the length of an axis in the transverse direction (13) to a length of an axis of the ring bodies (10) which runs in the spring direction (12) corresponds to a value of from 2:1 to 10:1 and preferably of from 3:1 to 5:1.

7. Suspension spring unit (1) according to one of the preceding claims, **characterized in that** the fibre composite material comprises fibre layers (14) and is, in particular, configured from the said fibre layers (14) which run at least predominantly in the circumferential direction (15) of the ring bodies (10).

8. Suspension spring unit (1) according to one of the preceding claims, **characterized in that** at least one guide element (16) is provided which guides the ring bodies (10) and prevents buckling of the ring bodies (10) out of the spring direction (12).

## Revendications

1. Unité ressort de suspension (1) pour un train de roulement de véhicule, pouvant être disposée entre une carrosserie de véhicule et un support de roue et constituant un composant du train de roulement de véhicule, réalisée avec des corps de ressort en un matériau renforcé par des fibres,
dans laquelle sont prévus au moins deux corps annulaires (10) en matériau renforcé par des fibres, disposés en série et avec un contour respectivement fermé, qui sont reliés ensemble par au moins un élément de connexion (11), les corps annulaires (10) présentant une section transversale circonférentielle réalisée sous forme plate à la manière d'une bande plate,
**caractérisée en ce que** ledit au moins un élément de connexion (11) est relié à la section transversale circonférentielle de telle sorte que la bande plate passe par le point de connexion avec l'élément de connexion (11) avec un tracé de section transversale inchangé.

2. Unité ressort de suspension (1) selon la revendication 1, **caractérisée en ce qu'**au moins deux éléments de connexion (11) sont disposés de manière diamétralement opposée sur les corps annulaires (10) de façon à définir un sens du ressort (12) passant par les éléments de connexion (11).

3. Unité ressort de suspension (1) selon la revendication 1 ou 2, **caractérisée en ce que** le corps annulaire (10) est réalisé de manière ovale et/ou **en ce que** les corps annulaires (10) sont réalisés de manière allongée dans une direction transversale (13) s'étendant transversalement au sens du ressort (12).

4. Unité ressort de suspension (1) selon l'une quelconque des revendications 1 à 3, **caractérisée en ce que** le contour fermé des corps annulaires (10) est formé par deux sections principales (10a) substantiellement droites et s'étendant de manière approximativement parallèle l'une à l'autre dans la direction transversale (13) et deux sections arrondies (10b) reliant les sections principales (10a).

5. Unité ressort de suspension (1) selon la revendication 3, **caractérisée en ce que** la réalisation ovale détermine une direction transversale (13) qui s'étend suivant l'axe longitudinal des corps annulaires ovales (10) et qui s'étend transversalement au sens du ressort (12).

6. Unité ressort de suspension (1) selon l'une quelconque des revendications précédentes, **caractérisée en ce que** le rapport entre la longueur d'un axe dans la direction transversale (13) et une longueur d'un axe des corps annulaires (10) s'étendant dans la direction de ressort (12) correspond à une valeur de 2:1 à 10:1, et de préférence de 3:1 à 5:1.

7. Unité ressort de suspension (1) selon l'une quelconque des revendications précédentes, **caractérisée en ce que** le matériau renforcé par des fibres comprend des couches de fibres (14), et est en particulier réalisé à partir de celles-ci, qui s'étendent au moins substantiellement dans la direction circonférentielle (15) des corps annulaires (10).

8. Unité ressort de suspension (1) selon l'une quelconque des revendications précédentes, **caractérisée en ce qu'**au moins un élément de guidage (16) est prévu qui guide les corps annulaires (10) et empêche un flambage des corps annulaires (10) hors de la direction de ressort (12).
